# EUROPÄISCHE PATENTSCHRIFT

(11) **EP 1 123 155 B1**
(45) Veröffentlichungstag und Bekanntmachung des Hinweises auf die Patenterteilung: **04.06.2003**
(21) Anmeldenummer: 99952613.0
(22) Anmeldetag: 19.10.1999
(51) Int. Cl.: B01F 15/02, B29B 7/80, B29B 7/76, B29B 7/74, B29B 7/24, B05C 11/10, G05D 7/00

(54) **VENTILEINRICHTUNG**
VALVE DEVICE
DISPOSITIF A SOUPAPE

(30) Priorität: 21.10.1998 DE 19848358
(43) Veröffentlichungstag der Anmeldung: 16.08.2001
(73) Patentinhaber: EDF Polymer-Applikation Maschinenfabrik GmbH, 6912 Hörbranz (AT)
(72) Erfinder: FETZ, Dietmar, A-6890 Lustenau (AT); HAUSBICHLER, Hannes, A-6900 Bregenz (AT)
(74) Vertreter: Hennicke, Ernst Rüdiger, Dipl.-Ing.
(86) Internationale Anmeldenummer: EP9907936
(87) Internationale Veröffentlichungsnummer: WO00023180

(56) Entgegenhaltungen:
- DE-A- 2 004 661
- DE-A- 3 630 910
- DE-A- 19 542 797
- US-A- 3 583 439
- US-A- 4 037 758
- US-A- 4 323 004
- US-A- 4 688 944
- US-A- 4 809 737

## Beschreibung

Die Erfindung betrifft eine Ventileinrichtung für dünn- bis zähflüssige Flüssigkeiten, insbesondere für flüssige Kunststoffkomponenten von ein- oder mehrkomponentigen Kunststoffgemischen, mit einem Ventilgehäuse mit einem Flüssigkeitszulauf und einem Dosierventil, das eine von einem Verschlußelement wahlweise verschließbare oder freigebbare Dosierdüse aufweist, sowie mit einer auf die Flüssigkeit im Flüssigkeitszulauf einwirkenden Drucksteuereinrichtung, die im wesentlichen aus einer auf das Verschlußelement einwirkenden, pneumatisch vorspannbaren Steuermembran besteht.

Derartige Ventileinrichtungen finden insbesondere in der Kunststoffverarbeitung bei Mischköpfen Verwendung, mit deren Hilfe die verschiedenen Kunststoff-Komponenten vermischt und dann als verarbeitungsfertiges Kunststoff gemischt durch einen Auslaß ejiziert und beispielsweise unmittelbar als Dichtung an ein Bauteil angespritzt werden. Die Ventileinrichtungen sind dabei an den Einlässen des Mischkopfes für die einzelnen Kunststoffkomponenten angeordnet und dienen dazu, die Zufuhr von einer Komponente bei geschlossenem Dosierventil zu unterbinden und bei geöffnetem Dosierventil dafür zu sorgen, das die zugeführte Komponente nicht nur in einem konstanten Volumenstrom, sondern auch mit voreingestelltem, möglichst gleichbleibenden Flüssigkeitsdruck in den Mischkopf eingebracht wird.

Aus der DE-OS 195 42 797 ist eine Ventileinrichtung bekannt, bei der die Drucksteuereinrichtung im wesentlichen von einer im Gehäuse angeordneten, auf das als Ventilnadel ausgebildete Verschlußelement einwirkenden Druckfeder gebildet wird, deren Federvorspannung von der Gehäuseaußenseite manuell durch Verstellen einer Stellschraube einstellbar ist. Die von der Feder auf die Düsennadel ausgeübte Kraft steht dabei im Gleichgewicht mit dem Flüssigkeitsdruck, der auf die quer zu deren Verschieberichtung verlaufende Düsennadel-Stirnfläche einwirkt. Druckkraft der Feder und auf die Düsennadel ausgeübte Druckkraft infolge des Flüssigkeitsdruckes sind im Betrieb im Gleichgewicht, so daß es durch Einstellen der Federvorspannung möglich ist, den Flüssigkeitsdruck im Flüssigkeitszulauf zu steuern.

Diese bekannte Einrichtung ist verhältnismäßig kompliziert hinsichtlich der Einstellung der korrekten Druckverhältnisse im Flüssigkeitszulauf, da diese Einstellung manuell von der Gehäuseaußenseite erfolgt und schon geringfügige Verstellungen der hierzu vorgesehenen Stellschraube verhältnismäßig große Druckänderungen in der Flüssigkeit zur Folge haben, da die wirksame, die Federkraft auf die Flüssigkeit Übertragende Stirnfläche an der Düsennadel bauartbedingt nur klein ist. Insbesondere nachteilig bei der bekannten Einrichtung ist es, daß damit ein Betrieb mit konstantem Flüssigkeitsdruck bei dem von einer Dosierpumpe gelieferten, gleichbleibendem Volumenstrom nur solange gewährleistet ist, solange die Düsennadel bei offenem Ventil ihre relative Lage im Ventilgehäuse beibehält. Falls sich nun der von der Düsennadel in eben dieser Relativlage freigegebene öffnungsquerschnitt der Düse verringert, beispielsweise durch Ablagerungen von sich verfestigenden Kunststoffkomponenten oder andere Verschmutzungen, muß die Düsennadel entgegen der Wirkung der Feder weiter geöffnet werden, um den erforderlichen, gleichbleibenden Strömungsquerschnitt für den konstanten Volumenstrom der Flüssigkeit zu erhalten. Schon ein geringes Verschieben der Düsennadel jedoch hat eine große Veränderung der Federspannung und damit der Federkraft zur Folge, so daß bereits bei Auftreten von wenigen Verschmutzungen am Düsenquerschnitt der Flüssigkeitsdruck stark ansteigt.

Aus der DE 36 30 910 A1 ist eine Ventileinrichtung der eingangs genannten Art bekannt, die mit einem eine Austrittsöffnung aufweisenden Düsenkopf versehen ist, in dem eine Düsennadel zwischen einer Dichtungsstellung und einer Öffnungsstellung hin- und herbewegbar ist und in den über eine Zufuhrleitung unter Druck Material einbringbar ist. Die Vorrichtung weist eine zwischen dem Material im Innenraum des Düsenkopfes und einer an der der Austrittsöffnung abgewandten Seite vorgesehenen Abdichtung des Innenraumes einen eine konstante Luftmenge enthaltenden Pufferraum auf. Dieser ist über eine Membran von einem Gegendruckraum getrennt.

Bei dieser bekannten Einrichtung befindet sich der Luftpuffer unmittelbar oberhalb der im Pufferraums ebenfalls enthaltenen Flüssigkeit, welche unter ungünstigen Bedingungen an die Membran gelangen kann. Die Flüssigkeit, die ja im allgemeinen aus einem erhärtenden Kunststoff besteht, kann an der Membran aushärten, die dann nicht mehr die erforderliche Flexibilität aufweist und ihrer Aufgabe nicht mehr gerecht wird.

Aufgabe der Erfindung ist es, diese Nachteile zu vermeiden und eine Ventileinrichtung der eingangs genannten Art so auszugestalten, daß damit nicht nur ein konstanter Flüssigkeitsdruck leicht einstellbar ist, der weitgehend unabhängig von der Stellung des Verschlußelements bei geöffnetem Dosierventil und damit auch bei Auftreten von Verunreinigungen am Düsenquerschnitt erhalten bleibt, sondern bei der auch keine Flüssigkeit an die empfindliche Steuermembran gelangen kann. Diese Aufgabe wird durch eine Ventileinrichtung mit den Merkmalen des Anspruchs 1 gelöst.

Die Verwendung einer pneumatisch bzw. servopneumatisch vorspannbaren Steuermembran gestattet eine besonders einfache Druckregelung der mit der Einrichtung zudosierten Flüssigkeit, da der Luftdruck zur Veränderung der Membranvorspannung leicht auch automatisch eingestellt werden kann. Durch die Verwendung eines geeigneten, vorzugsweise möglichst großen Druckspeichers für die die Membran vorspannende Druckluft haben Verschiebungen des Verschlußelements, wie sie durch Verunreinigungen am Düsenauslaß auftreten können, praktisch keinen oder nur einen vernachlässigbar geringen Druckanstieg der Druckluft und damit auch keine Veränderung des Flüssigkeitsdruckes zur Folge. Insbesondere ermöglicht die erfindungsgemäße Ausgestaltung der Ventileinrichtung auch deren automatische Regelung durch eine rechnergestützte Einstellung bzw. Veränderung des auf die Steuermembran wirkenden Luftdruckes. Bei alledem sorgt die Absperrmembran in jedem Betriebszustand dafür, daß die empfindliche Steuermembran auch unter ungünstigen Bedingungen nicht von dem flüssigen Kunststoff bzw. Kunststoffgemisch verunreinigt werden kann.

In bevorzugter Ausgestaltung der Erfindung kann im Ventilgehäuse zusätzlich ein Rezirkulationsventil so angeordnet sein, daß wahlweise das Dosierventil für die Zufuhr von Flüssigkeit zu einer Verarbeitungseinrichtung oder das Rezirkulationsventil für die Rückführung der Flüssigkeit zu einem Vorratsbehälter freigegeben ist. Durch diese an sich bekannte Ausgestaltung wird die zugeführte Flüssigkeit entweder über das Dosierventil der Verarbeitungsvorrichtung, beispielsweise dem Mischkopf zugeführt oder über das Rezirkulationsventil im Kreis zurück zum Vorratsbehälter gefördert. Die kompakt bauende Einheit von Dosier- und Rezirkulationsventil in einem gemeinsamen Gehäuse vermeidet Schwierigkeiten in der Startphase der nachgeschaltetetn Verarbeitungseinrichtung, da durch das Umpumpen von Flüssigkeit im Kreislauf dieser immer vollständig gefüllt ist und immer frische Flüssigkeit zudosiert wird, sobald das Dosierventil öffnet.

Die Steuermembran ist vorzugsweise Teil einer pneumatisch beaufschlagbaren Druckregelkammer und wirkt auf das als Ventilnadel ausgestaltete Verschlußelement über einen im Gehäuse verschieblichen Druckkolben ein. Die Druckregelkammer bildet dabei den Druckspeicher für die Druckluft, die über die Steuermembran auf die Flüssigkeit im Flüssigkeitszulauf einwirkt. Über den Druckkolben wird die von der Druckluft ausgeübte Kraft weitgehend ohne Reibungsverluste auf die Ventilnadel übertragen.

Vorzugsweise ist die Absperrmembran zwischen dem Verschlußelement und dem Druckkolben angeordnet, so daß auch der Druckkolben vom Flüssigkeitszulauf getrennt ist und seine hochgenaue, möglichst reibungsarme Aufnahme im Ventilgehäuse nicht durch den Eintritt von Flüssigkeit beeinträchtigt wird.

Der Druckkolben kann von der Steuermembran über einen an der Steuermembran angebrachten Druckzapfen beaufschlagt sein, der sich über ein Kugellagerelement am Druckkolben abstützt. Das Kugellagerelement, das vorzugsweise einfach aus einer einzelnen Kugel besteht, bewirkt eine gleichmäßige, möglichst genau zentrische Übertragung der zwischen Druckkolben und Druckzapfen wirkenden Kräfte weitgehend ohne Reibungsverluste, so das ein genauer Druckausgleich zwischen Luftdruck an der Steuermembran und Flüssigkeitsdruck im Flüssigkeitszulauf stattfinden kann.

Vorzugsweise ist das Verschlußelement von einer sich im Gehäuse abstützenden Feder in Richtung auf den Druckkolben vorgespannt, die beim Öffnen des Dosierventils das Verschlußelement in der Dosierdüse zumindest soweit zurückzieht, daß der Flüssigkeitsdruck der zugeführten Flüssigkeit auf das Verschlußelement einwirken kann. Das Verschlußelement des Dosierventils kann von einer Betätigungseinrichtung zum Verschließen bzw. Freigeben der Dosierdüse verschieblich sein, die in besonders vorteilhafter Weise im wesentlichen aus einem von einem Betätigungszylinder betätigbaren, im Gehäuse schwenkbar gelagerten Betätigungshebel besteht, der auf das Verschlußelement bzw. den Druckzylinder entgegen der Feder einwirkt. Insbesondere bei der besonders vorteilhaften Ausgestaltung der Erfindung, bei der das Rezirkulationsventil und das Dosierventil im wesentlichen gleich aufgebaut sind, ist es dann auch möglich, daß das Dosierventil und das Rezirkulationsventil bzw. deren Verschlußelemente von einem gemeinsamen Betätigungshebel betätigbar sind.

Weitere Merkmale und Vorteile der Erfindung ergeben sich aus der nachfolgenden Beschreibung und der Zeichnung, worin eine bevorzugte Ausführungsform der Erfindung an einem Beispiel näher erläutert ist. Es zeigt:
- Fig. 1: ein Fließschema zur Illustration des bevorzugten Einsatzgebietes einer erfindungsgemäßen Ventileinrichtung;
- Fig.2: eine Ventileinrichtung nach der Erfindung in einer Draufsicht;
- Fig.3: den Gegenstand der Fig.2 in einem Schnitt längs der Linie III - III bei geöffnetem Dosierventil; und
- Fig.4: den Gegenstand der Fig.2 in einem Schnitt längs der Linie IV - IV bei geöffnetem Rezirkulationsventil.

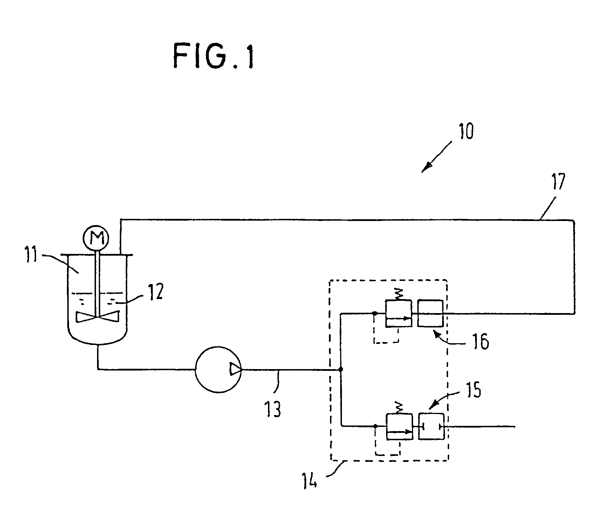

Fig. 1 zeigt ein Fließschema eines Teils einer Kunststoffverarbeitungseinrichtung 10 mit einem Mischbehälter 11 für eine zu verarbeitende Kunststoffkomponente 12, die über eine Leitung 13 und eine Ventileinrichtung 14 entweder über ein Dosierventil 15 einem nicht näher dargestellten Mischkopf für Kunststoffge-mische zugeführt wird oder über ein Rezirkulationsventil 16 über eine zweite Leitung 17 im Kreis zurück zum Vorratsbehälter 11 gepumpt wird.

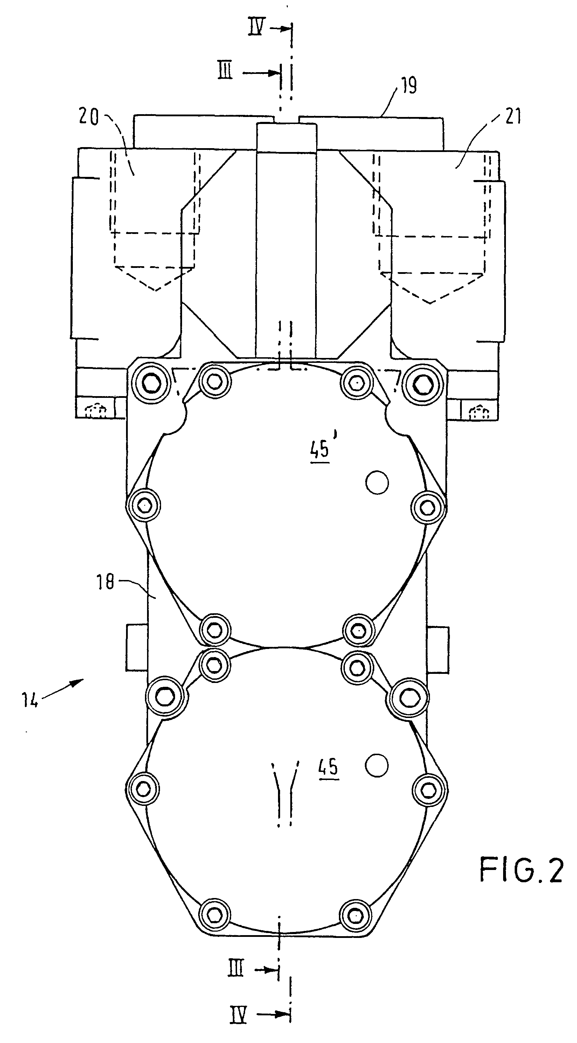

Die Ventileinrichtung 14 ist in ihren Einzelheiten in den Fig. 2 bis 4 dargestellt. Sie besteht im wesentlichen aus einem Ventilgehäuse 18, in dem das Dosierventil 15 und das Rezirkulationsventil 16 angeordnet sind. An der Gehäuseoberseite 19 sind ein Flüssigkeitszulauf 20 und ein Rücklaufanschluß 21 zum Anschluß der Leitungen 13 bzw. 17 vorgesehen, während am unteren Ende des Gehäuses ein Flüssigkeitsauslaß 22 vorgesehen ist, aus dem die Kunststoffflüssigkeit in den Mischkopf der Kunststoffverarbeitungseinrichtung eingespritzt wird.

Das Dosierventil 15 und das Rezirkulationsventil 16 sind im wesentlichen gleich aufgebaut, so daß hier lediglich das Dosierventil in seinen Einzelheiten beschrieben werden soll. Es besteht im wesentlichen aus einer ein Verschlußelement für den Flüssigkeitsauslaß bildenden Ventilnadel 23, die in einem im Auslaß 22 angeordneten Kanal 24 axial verschieblich aufgenommen ist und mit ihrer Spitze 25 in nach vorne, in der Zeichnung nach links verschobener Stellung die Öffnung 26 des Auslasses verschließt und in zurückgeschobener Lage freigibt. Um das Öffnen der Ventilnadel 23 zu erleichtern, ist im Kanal eine kleine Schrabendruckfeder 27 angeordnet, die bei geschlossenem Ventil vorgespannt ist und dann bestrebt ist, die Nadel in die Offenstellung des Ventils zu verschieben.

Mit ihrem rückwärtigen, in der Zeichnung rechts liegenden Kopf 28 liegt die Ventilnadel 23 an einer Absperrmembran 29 an, die die im Ventilgehäuse 18 ausgebildeten, Flüssigkeit führenden Kanäle 30 für den Flüssigkeitszulauf zur Auslaß 22 bzw. für den Rücklauf von den übrigen Ventileinbauten trennt. Die Absperrmembran ist zwischen einem Teil 18a des Ventilgehäuses und einem in dieses eingeschraubten Zylinderelement 31 eingeklemmt und kann in Axialrichtung der Ventilnadel sich soweit auswölben, daß sie ein Verschieben der Nadel 23 aus deren Schließ- in die Offenlage nicht behindert oder begrenzt.

Auf der anderen, keine Flüssigkeit führenden Seite der Absperrmembran 29 ist in dem Zylinderelement 31 ein Druckkolben 32 verschieblich angeordnet, der mit seiner Vorderseite 33 über die zwischenliegende Absperrmembran 29 gegen den Kopf 28 der Ventilnadel 23 anliegt. An der Rückseite 34 des Druckkolbens 32 ist eine zentrische Bohrung 35 vorgesehen, die einen Druckzapfen 36 aufnimmt, der sich am Bohrungsgrund 37 über eine Kugel 38 am Druckkolben abstützt.

Der Druckzapfen 36 wiederum ist an seinem hinteren Ende mit einer Einspanneinrichtung 39 für eine Steuermembran 40 versehen, die aus einer ersten Einspannplatte 41 und einer mit dieser über eine zentrische Schraube 42 verschraubten, zweiten Einspannplatte 43 besteht, die die Steuermembran 40 zwischen sich abdichtend einspannen. Die Steuermembran ist Teil einer pneumatisch beaufschlagbaren Druckkammer 44, an deren Rand sie zwischen einem Teil 18b des Ventilgehäuses und einem Druckkammerdeckel 45 luftdicht eingespannt ist. Die Druckkammer weist einen nicht näher dargestellten Anschluß für Druckluft auf, die von einer externen Druckluftversorgung geregelt an der Druckkammer anliegt.

Das Rezirkulationsventil ist weitgehend identisch wie das Dosierventil aufgebaut, jedoch ist die Ventilnadel 23' des Rezirkulationsventils 16 kürzer als beim Dosierventil und dient dazu den Flüssigkeitszulauf 20 in der offenen Düssennadelstellung mit dem Rücklauf 21 zu verbinden bzw. in der Schließstellung des Ventils einen Flüssigkeitsrücklauf über die zweite Leitung 17 zu unterbinden, so daß die gesamte zugeführte Flüssigkeit über das dann offene Dosierventil 15 in die Mischkammer zu ejizieren.

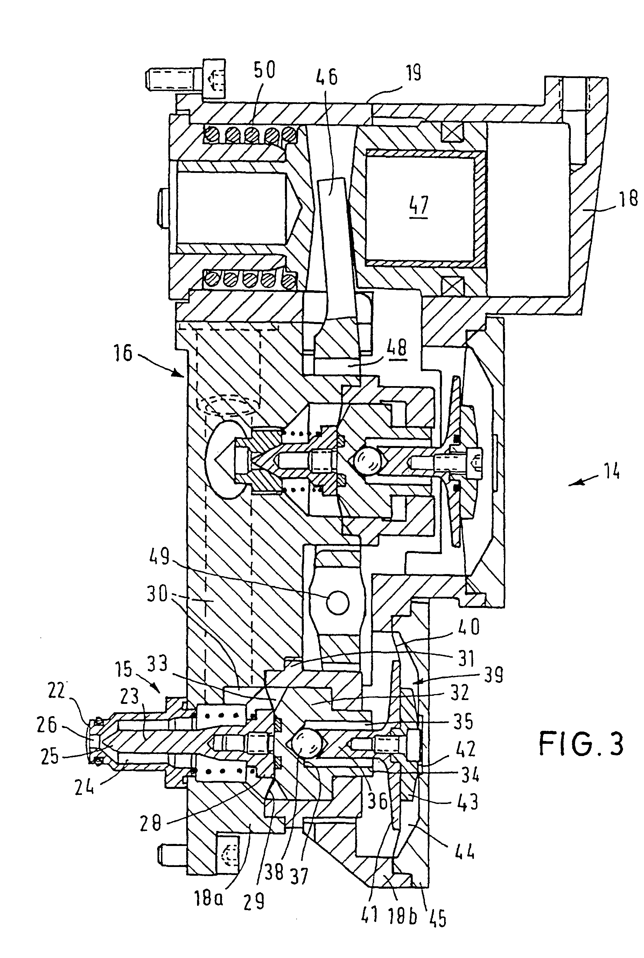

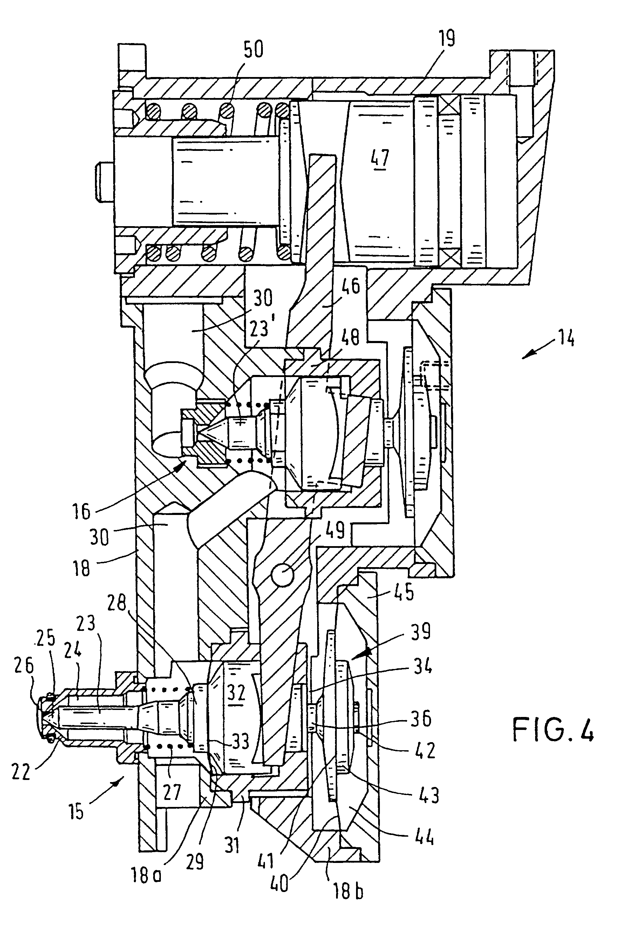

Der Schaltvorgang der beiden Venitle im Gehäuse wird über eine gemeinsame Schalteinrichtung bewirkt, die im wesentlichen aus einem im Gehäuse schwenkbeweglich gelagerten Schalthebel 46, der von einem im oberen Teil des Ventilgehäuses 18 angeordneten Betätigungszylinder 47 verschwenkt werden kann und dabei die Ventile gleichzeitig so betätigt, das das eine Ventil geschlossen wird, wenn das andere Ventil geöffnet werden soll. Hierzu ist die Anordnung so getroffen, daß der Schalthebel bei geschlossenem Rezirkulationsventil und offenem Dosierventil (Fig.3) mit einer oberhalb der Schwenkachse 49 liegenden, den Druckkolben des Rezirkulationsventils 16 umfassenden Betätigungsgabel 48 auf diesen drückt und so die Ventilnadel 23' des Rezirkulationsventils in die Schließstellung drückt, während das untere Ende des Schalthebels 46 außer Kontakt mit dem Druckkolben des Dosierventils ist, so daß die Ventilnadel von der Feder 27 zurück in das Gehäuse gedrückt wird und die Öffnung 26 freigibt. Beim Umschalten in den Rezirkulationsbetrieb (Fig.4) wird der Druck im Betätigungszylinder 47 verringert, wodurch eine Betätigungsfeder 50 den Schalthebel 46 umlegt, wobei einerseits die Betätigungsgabel 48 außer Eingriff mit dem Druckkolben des Rezirkulationsventils gelangt und die Ventilnadel 23' öffnet und andererseits der Schalthebel mit seinem unteren Ende den Druckkolben des Dosierventils nach vorne, in der Zeichnung nach links drückt und so das Ventil schließt.

Man erkennt, daß bei geöffnetem Dosierventil 15 weder die Druckfeder noch der Schalthebel auf die Düsennadel oder den Druckkolben einwirken und das Verschlußelement somit von mechanischen Einflußgrößen praktisch unbelastet über den Druckkolben und den Druckzapfen an der Steuermembran abstützt. Dies bedeutet aber auch, das der Druck der durch die Ventileinrichtung strömenden Flüssigkeit im Gleichgewicht mit dem in der Druckkammer 44 herrschenden pneumatischen Druck ist, und zwar weitgehend unbeeinflußt von der Stellung der Düsennadel und des Kolbens im Ventilgehäuse, da eine Verschiebung des Druckkolbens in Axialrichtung und damit ein Eindrücken der Steuermembran in die Druckkammer darin nur eine geringe Volumenänderung bewirkt und der damit einhergehende, theoretisch stattfindende Druckanstieg so gering ist, das er als vernachlässigbar gering außer acht gelassen werden kann. Der theoretische Druckanstieg in der luftbeaufschlagten Druckkammer ist umso geringer, je größer das Gesamtvolumen des Druckluftkreislaufes ist, in den die Druckkammer eingebunden ist. Da der Luftdruck in der Druckkammer in der Praxis automatisch geregelt wird, ist in diesen Fällen das Volumen der Druckkammer ohne besondere Bedeutung für den Druckanstieg in der Luft und damit in der Flüssigkeit.

Durch diese besondere Ausgestaltung ist es mit der erfindungsgemäßen Ventileinrichtung möglich, einen konstanten Flüssigkeitsdruck bei der zugeführten Kunststoffkomponente unabhängig von der Stellung der Düssennadel im Gehäuse zu gewährleisten. Sollten also Verschmutzungen des Dosierventils oder des Rezirkulationsventils im Bereich von deren Öffnungen 26 auftreten, die den Durchflußquerschnit in diesem Bereich verringern, kann die Düssennadel weiter nach hinten ausweichen, wodurch der ursprüngliche Strömungsquerschnitt wieder hergestellt wird, ohne daß damit auch ein Druckanstieg in der Flüssigkeit verbunden wäre. Durch Veränderung des Luftdruckes in der Druckkammer kann der Flüssigkeitsdruck sehr einfach und genau verändert werden, so daß sich die erfindungsgemäße Ventileinrichtung hervorragend für eine automatische Steuerung bzw. Regelung des Flüssigkeitsdruckes eignet, die über eine geeignete Steuereinrichtung, beispielsweise eine speicherprogammierbare Steuerung (SPS) erfolgen kann.

Die mechanische Koppelung der beiden Ventile über den gemeinsamen Schalthebel garantiert, daß immer beide Ventile gleichzeitig betätigt werden und immer das eine Ventil geöffnet ist, während sich das andere in seiner Schließstellung befindet, so daß eine Fehlbedienung, beispielsweise durch zwei gleichzeitig geschlossene Ventile, sicher ausgeschlossen ist.

## Patentansprüche

1. Ventileinrichtung für dünn- bis zähflüssige Flüssigkeiten, insbesondere für flüssige Kunststoffkomponenten von ein- oder mehrkomponentigen Kunststoffgemischen, mit einem Ventilgehäuse mit einem Flüssigkeitszulauf und einem Dosierventil (15), das eine von einem Verschlußelement (23) wahlweise verschließbare oder freigebbare Dosierdüse (26) aufweist, sowie mit einer auf die Flüssigkeit im Flüssigkeitszulauf einwirkenden Drucksteuereinrichtung (40,44), die im wesentlichen aus einer auf das Verschlußelement (23) einwirkenden, pneumatisch vorspannbaren Steuermembran (40) besteht, **dadurch gekennzeichnet, daß** die Drucksteuereinrichtung (40,44) vom Flüssigkeitszulauf (30) bzw. den Flüssigkeit führenden Kanälen (30) im Ventilgehäuse über eine Absperrmembran (29) getrennt angeordnet ist und daß das Verschlußelement (23) des Dosierventils (15) von einer Betätigungseinrichtung (46,47,49,50) zum Verschließen bzw. Freigeben der Dosierdüse (26) verschieblich ist, wobei die Betätigungseinrichtung einen von einem Betätigungszylinder (47) betätigbaren, im Gehäuse (18) schwenkbar gelagerten Schalthebel (46) umfasst, der auf das Verschlußelement (23) bzw. den Druckzylinder (32) einwirkt.

2. Ventileinrichtung nach Anspruch 1, **dadurch gekennzeichnet, daß** im Ventilgehäuse (18) zusätzlich ein Rezirkulationsventil (16) so angeordnet ist, daß wahlweise das Dosierventil (15) für die Zufuhr von Flüssigkeit (12) zu einer Verarbeitungseinrichtung oder das Rezirkulationsventil (16) für die Rückführung der Flüssigkeit (12) zu einem Vorratsbehälter (11) freigegeben ist.

3. Ventileinrichtung nach Anspruch 1 oder 2, **dadurch gekennzeichnet, daß** die Steuermembran (40) Teil einer pneumatisch beaufschlagbaren Druckregelkammer (44) ist und auf das als Ventilnadel (23) ausgestaltete Verschlußelement über einen im Gehäuse (18) verschieblichen Druckkolben (32) einwirkt.

4. Ventileinrichtung nach einem der Ansprüche 1 bis 3, **dadurch gekennzeichnet, daß** die Absperrmembran (29) zwischen dem Verschlußelement (23) und dem Druckkolben (32) angeordnet ist.

5. Ventileinrichtung nach Anspruch 3 oder 4, **dadurch gekennzeichnet, daß** der Druckkolben (32) von der Steuermembran (40) über einen an der Steuermembran (40) angebrachten Druckzapfen (36) beaufschlagt wird, der sich über ein Kugellagerelement (38) am Druckkolben (32) abstützt.

6. Ventileinrichtung nach einem der Ansprüche 3 bis 5, **dadurch gekennzeichnet, daß** das Verschlußelement (23) von einer sich im Gehäuse (18) abstützenden Feder (27) in Richtung auf den Druckkolben (32) vorgespannt ist.

7. Ventileinrichtung nach einem der Ansprüche 2 bis 8, **dadurch gekennzeichnet, daß** das Rezirkulationsventil (16) und das Dosierventil (15) im wesentlichen gleich aufgebaut sind.

8. Ventileinrichtung nach einem der Ansprüche 2 bis 9, **dadurch gekennzeichnet, daß** das Dosierventil (15) und das Rezirkulationsventil (16) bzw. deren Verschlußelemente (23,23') von einem gemeinsamen Schalthebel (46) betätigbar sind.

## Claims

1. Valve device for low-viscosity to high-viscosity fluids, in particular for fluid plastic components of plastic mixtures having single or multiple components, with a valve housing having a fluid inflow and a dosing valve (15), which comprises a dosing nozzle (26) that can optionally be closed or opened by means of a closing element (23), as well as a pressure control device (40, 44) which influences the fluid in the fluid inflow, which consists essentially of a pneumatically pretensionable control membrane (40) which acts on the closing element (23), **characterised in that** the pressure control device (40,44) is arranged separately from the fluid inflow (30) or the passages (30) holding the fluid in the valve housing by means of a shut-off membrane (29) and that the closing element (23) of the dosing valve (15) can be displaced by an actuating device (46, 47, 49, 50) for closing or opening the dosing nozzle (26), whereby the actuating device comprises a control lever (46) which can be actuated by an actuating cylinder (47), which is mounted pivotally in the housing (18), which acts on the closing element (23) or the pressure cylinder (32).

2. Valve device according to claim 1, **characterised in that** a recirculation valve (16) is additionally arranged in the valve housing (18), so that the dosing valve (15) is optionally opened for the supply of fluid (12) to a processing device or the recirculation valve (16) is opened for the return of the fluid (12) to a storage vessel (11).

3. Valve device according to claim 1 or 2, **characterised in that** the control membrane (40) is part of a pneumatically chargeable pressure control chamber (44) and acts on the closing element formed as a valve needle (23) by means of a plunger (32) which is moveable in the housing (18).

4. Valve device according to one of claims 1 to 3, **characterised in that** the shut-off membrane (29) is arranged between the closing element (23) and the plunger (32).

5. Valve device according to claim 3 or 4, **characterised in that** the plunger (32) is charged by the control membrane (40) by means of a pressure pin (36) which is mounted on the control membrane (40), which pin is supported at the plunger (32) by means of a ball bearing element (38).

6. Valve device according to one of claims 3 to 5, **characterised in that** the closing element (23) is pretensioned by a spring (27) which is supported in the housing (18) in the direction of the plunger (32).

7. Valve device according to one of claims 2 to 8, **characterised in that** the recirculation valve (16) and the dosing valve (15) are constructed in essentially the same way.

8. Valve device according to one of claims 2 to 9, **characterised in that** the dosing valve (15) and the recirculation valve (16) or their closing elements (23, 23') can be actuated by a common control lever (46).

## Revendications

1. Dispositif de vanne pour liquides fluides à visqueux, notamment pour les composants en matière plastique liquide de mélanges de matière plastique à un ou plusieurs composants, comportant un boîtier de vanne avec une entrée de liquide et une vanne de dosage (15) qui présente une buse de dosage (26) pouvant être fermée ou ouverte au choix par un élément de fermeture (23), ainsi qu'un dispositif de commande de pression (40, 44) agissant sur le liquide dans l'entrée de liquide, qui consiste substantiellement en une membrane de commande (40) pouvant être précontrainte pneumatiquement agissant sur l'élément de fermeture (23),
**caractérisé en ce que**
le dispositif de commande de pression (40, 44) est disposé séparément de l'entrée de liquide (30) ou des canaux guidant le liquide (30) dans le boîtier de la vanne par une membrane d'arrêt (29) et que l'élément de fermeture (23) de la vanne de dosage (15) est déplaçable par un dispositif d'actionnement (46, 47, 49, 50) servant à fermer ou à ouvrir la buse de dosage (26), le dispositif d'actionnement comprenant un levier de commande (46) actionnable par un vérin d'actionnement (47) et disposé de manière à pouvoir pivoter dans le boîtier (18), levier qui agit sur l'élément de fermeture (23) ou le vérin de compression (32).

2. Dispositif de vanne selon la revendication 1, **caractérisé en ce qu'**est disposée en plus dans le boîtier de vanne (18) une vanne de recirculation (16) de manière à ce qu'au choix la vanne de dosage (15) servant à l'acheminement de liquide (12) vers un dispositif de traitement ou la vanne de recirculation (16) servant à ramener le liquide (12) vers une cuve de stockage (11) soit ouverte.

3. Dispositif de vanne selon la revendication 1 ou 2, **caractérisé en ce que** la membrane de commande (40) fait partie d'une cellule de réglage de pression (44) pouvant être sollicitée pneumatiquement et agit sur l'élément de fermeture conçu comme un pointeau de soupape (23) par l'intermédiaire d'un piston de compression (32) déplaçable dans le boîtier (18).

4. Dispositif de vanne selon une des revendications 1 à 3, **caractérisé en ce que** la membrane d'arrêt (29) est disposée entre l'élément de fermeture (23) et le piston de compression (32).

5. Dispositif de vanne selon la revendication 3 ou 4, **caractérisé en ce que** le piston de compression (32) est touché par la membrane de commande (40) par l'intermédiaire d'une cheville de compression (36) placée sur la membrane de commande (40), cheville qui s'appuie par l'intermédiaire d'un élément de roulement à billes (38) sur le piston de compression (32).

6. Dispositif de vanne selon une des revendications 3 à 5, **caractérisé en ce que** l'élément de fermeture (23) est précontraint en direction du piston de compression (32) par un ressort (27) s'appuyant dans le boîtier (18).

7. Dispositif de vanne selon une des revendications 2 à 8, **caractérisé en ce que** la vanne de recirculation (16) et la vanne de dosage (15) sont d'une structure substantiellement identique.

8. Dispositif de vanne selon une des revendications 2 à 9, **caractérisé en ce que** la vanne de dosage (15) et la vanne de recirculation (16) ou leurs éléments de fermeture (23, 23') peuvent être actionnées par un levier de commande commun (46).
